(19) Europäisches Patentamt
European Patent Office
Office européen des brevets

(11) Publication number : **0 518 702 A1**

(12) # EUROPEAN PATENT APPLICATION

(21) Application number : **92305446.4**

(22) Date of filing : **15.06.92**

(51) Int. Cl.$^5$ : **C08G 75/02,** C08J 3/24

(30) Priority : **14.06.91 JP 169013/91**

(43) Date of publication of application :
**16.12.92 Bulletin 92/51**

(84) Designated Contracting States :
**BE DE FR GB IT NL**

(71) Applicant : **Tosoh Corporation**
**4560, Kaisei-cho**
**Shinnanyo-shi, Yamaguchi-ken (JP)**

(72) Inventor : **Sakane, Takehiko**
**2273-1, Ikuwa-cho**
**Yokkaichi-shi, Mie-ken (JP)**
Inventor : **Inoue, Hiroshi**
**5-8, Betsumei 3-chome**
**Yokkaichi-shi, Mie-ken (JP)**
Inventor : **Kato, Toshikazu**
**13-3, Takamidai 2-chome**
**Yokkaichi-shi, Mie-ken (JP)**

(74) Representative : **Kearney, Kevin David Nicholas et al**
**KILBURN & STRODE 30 John Street**
**London, WC1N 2DD (GB)**

(54) **Process for preparing modified polyphenylene sulfide resins.**

(57) Melt viscosity of polyphenylene sulfide materials highly susceptible to curing reaction is increased at a moderate rate that is convenient for attaining a desirably increased melt viscosity at a precisely estimated time in the course of curing process. The curing process is carried out by heating the curing-susceptible polyphenylene sulfide material at about 190 - 270°C in a non-oxidizing, inert gas. The process is monitored by measuring the weight loss percentage of the material upon heating at intervals during the process. When a weight loss upon heating at 330°C for 30 minutes has dropped to a level of not greater than 0.4 wt.%, the curing process may be completed to give a cured PPS having a usefully increased melt viscosity.

EP 0 518 702 A1

This invention relates to cured polyphenylene sulfide resins and a process for preparing cured polyphenylene sulfide resins. In particular, the invention relates to such a process in which a starting polyphenylene sulfide resin material is cured in a non-oxidizing, inert gas.

Because of their excellent heat resistance and chemical resistance properties, polyphenylene sulfide resins have drawn a good deal of attention as materials for preparing electrical and electronic parts, automotive parts and the like.

Further the resins are moldable or shapable into various articles such as parts, films, sheets, fibers, etc by means of, for example, injection molding and extrusion molding techniques and have been employed in a variety of fields where their heat resistance and chemical resistance properties are desired or favored.

Polyphenylene sulfide resins are a class of polymers comprising essentially recurring units of the structure:

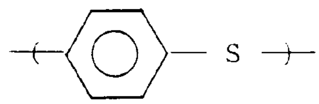

One of the typical processes for producing polyphenylene sulfide resins is disclosed in Japanese Patent Publication (KOKOKU) SHO 45-3368, which comprises heating and reacting a dihalo-aromatic compound with an alkali metal sulfide, such as sodium sulfide, in a polar aprotic solvent, such as N-methylpyrrolidone. However, the product polyphenylene sulfide (referred to as PPS hereinafter) resins as prepared by this type of processes have such a low level of molecular weight that the resins as prepared are not directly employable in molding and shaping applications, such as injection molding. Therefore, in order to solve the problem, it has been proposed to increase the molecular weight of PPS by oxidatively curing the material in air; see for example United States Patent 3,793,256. The thus resulting PPS material has a sufficiently increased molecular weight to permit the material to be employed in molding applications.

However, where a PPS material highly susceptible to curing reaction is oxidatively cured in air, generally the melt viscosity of the material is changed at a high rate and, thus, it is very difficult to precisely control the curing process to achieve a desired level of melt viscosity. Thus, Japanese Patent Public Disclosure (KOKAI) HEI 1-121327 discloses a method for curing PPS materials in an atmosphere containing a low proportion of oxygen. However, this reference suggests that the curing rate is substantially independent of the concentration of oxygen in the curing atmosphere.

Where a PPS material that is excessively susceptible to the curing reaction and shows an unduly high curing rate is employed, although it would be convenient to use a decreased curing temperature in order to control the melt viscosity of the PPS material to a desired level, use of such a low curing temperature will result in an insufficient removal of low-boiling-point substances, such as oligomers and solvent, contaminating the PPS material. This, in turn, results in a serious problem in that, when the material is melted, a large amount of gases is liable to be evolved, which would adversely affect the moldability of the melt and the physical properties of the resulting molded products.

Accordingly, an object of the invention is to provide a process in which a PPS material which, if cured in air, would show an unduly high curing rate and would make controlled increase of the melt viscosity difficult, can be submissively cured under easy and simple control to give a cured product having a desirably increased melt viscosity and showing a substantially decreased gas evolution, when melted.

Another object of the invention is to provide modified PPS materials having a melt viscosity which has been increased under control in accordance with the process of the invention.

A further object of the invention is to provide cured PPS materials which, when melted, will evolve a substantially decreased volume of gases or volatile impurities.

Our efforts have been focussed on solving the above-discussed prior art problems. Now, we have devised a PPS curing process useful for easily and simply controlling the melt viscosity of PPS materials which, if cured in air, will be unduly rapidly cured.

Accordingly, the present invention provides a process for preparing modified PPS resins which comprises curing a PPS resin material by heating it in a non-oxidizing, inert gas at a temperature in the range of from about 190°C to about 270°C, wherein the said PPS material has melt viscosity properties satisfying the following algebraic expression:

$$\log \eta_5 / \log \eta_0 \geqq 1.5$$

where $\eta_5$ represents the value of the melt viscosity of the starting PPS material after it has been cured in air at 250°C for 5 hours, and

$\eta_0$ represents the value of the melt viscosity of the starting PPS material as such; and

wherein the curing of the said starting PPS material in the non-oxidizing, inert gas is conducted to such

an extent that the product cured resin will exhibit a weight loss upon heating of not greater than 0.4% by weight when the said product cured resin is heated at 300°C for 30 minutes.

Where a value of melt viscosity of PPS material, whether uncured or cured, is referred to herein, the value is that determined in a KOHKA-type flow tester at a temperature of 300°C using an orifice of a 0.5 mm diameter and a 2 mm length under a load or weight of 10 kg.

The invention will be described in more detail.

The PPS materials used in the present invention may be prepared, for example, by a typical process in which a dihalo aromatic compound, optionally with a polyhalo aromatic compound containing three or more halogen atoms in the molecule or a monohalo aromatic compound, is reacted with an alkali metal sulfide in a polar aprotic solvent.

Examples of the polar aprotic solvents which may be used include N,N-dimethyl acetamide, N,N-dimethyl formamide, hexamethyl phosphoramide, N-methyl-ε-caprolactam, N-ethyl-2-pyrrolidone, N-methyl-2-pyrrolidone, 1,3-dimethylimidazolidinone, tetramethylurea and the like and mixtures thereof.

Examples of the alkali metal sulfides which may be used include lithium, sodium, potassium, rubidium and cesium sulfide and mixtures thereof. These may be in hydrated form. The alkali metal sulfide may be prepared by reacting an alkali metal hydrosulfide with an alkali metal base, or by reacting hydrogen sulfide with an alkali metal base. The alkali metal sulfide may be formed in situ prior to introduction of the dihalobenzene reactant into the polymerization system, or may be prepared separately from the polymerization system before use. Of these sulfides, sodium sulfide is preferably employed.

The term "dihalo aromatic compound" is intended to mean an aromatic compound having two halogen groups in the molecule. Examples thereof include p-dichlorobenzene, p-dibromobenzene, p-diiodobenzene, and mixtures thereof. Conveniently, p-dichlorobenzene is used. If desired, the PPS materials may be copolymers comprising comonomeric units derived from, for example, dihalo aromatic compounds, such as m-dihalobenzenes (e.g. m-dichlorobenzene), o-dihalobenzenes (e.g. o-dichlorobenzene), dichloronaphthalene, dibromonaphthalene, dichlorodiphenyl sulfone, dichlorobenzophenone, dichlorodiphenyl ether, dichlorodiphenyl sulfide, dichlorodiphenyl, dibromodiphenyl, dichlorodiphenyl sulfoxide, dichloroaniline, dichlorophenol, dichlorobenzoic acid and the like; polyhalo aromatic compounds, such as trichlorobenzenes (e.g. 1,2,4-, 1,3,5-1,2,3-trichlorobenzenes), trichloroaniline, trichloronitrobenzene, trichlorobenzoic acid, trichlorophenol, trichlorotoluene, tetrachlorobenzene, tetrabromobenzene, hexachlorobenzene and the like; and monohalo aromatic compounds, such as aminochlorobenzenes, diaminochlorobenzenes, chlorobenzoic acids, chlorophenols, chlorothiophenols, chloronitrobenzenes and the like; and mixtures thereof; provided that the comonomeric units are present in a proportion of less than 10 mole % on the basis of the units derived from the p-dihalobenzene monomer.

The PPS material to be used in the invention should be in the uncured or substantially uncured state and should be one that will exhibit an unduly high curing rate, when subjected to oxidative curing, for example in air. More precisely, the PPS material to be used in the invention should be one exhibiting an unduly high curing rate, when cured, and which has melt viscosity properties satisfying the following algebraic expression:

$$\log \eta_5 / \log \eta_0 \geqq 1.5$$

where $\eta_5$ represents the value of the melt viscosity that will be observed with the starting PPS material after it has been cured in air at 250°C for 5 hours, and

$\eta_0$ represents the value of the melt viscosity that is observed with the starting PPS material as such;

where the respective values of melt viscosity, $\eta_5$ and $\eta_0$, are determined as defined hereinbefore. The melt viscosity $\eta_5$ after curing for 5 hours in air at 250°C is a value measured using a sample of PPS material which has been cured for 5 hours in an oven maintained at 250°C by the above-defined KOHKA-type flow testing method.

The present invention is essentially characterized in that the starting PPS material of the specified melt viscosity properties is cured in a non-oxidizing inert gas at a temperature in the range of about 190° - 270°C so as to give a cured product that will exhibit a weight loss upon heating of not greater than 0.4% by weight when said cured product is heated at 330°C for 30 minutes.

The non-oxidizing, inert gases which may be used in the invention include, for example, helium, argon, nitrogen, carbon dioxide, steam and the like, and mixtures thereof. Nitrogen is most preferred from an economic point of view.

The inert gas atmosphere used in the invention may contain less than about 1% by volume of oxygen, because such a content of oxygen would have no substantial adverse effect on the process and would present no serious problems in the practice of the process. However, if the content of oxygen in the inert gas atmosphere used in the invention exceeds about 1% by volume, exerting the control over the melt viscosity of the high-curing-rate PPS material could become very difficult in the course of the process.

The curing temperature used in the present process is preferably in the range of about 190° to about 270°C.

Within this temperature range, generally, the PPS materials are in the form of powder and may be effectively cured under the non-oxidizing, inert gas atmosphere in any apparatus similar to those used for the conventional oxidative curing processes, for example, various blenders, such as ribbon blender, or fluidized bed reactors or the like. Where the curing temperature is less than about 190°C, an unduly lengthy curing time is required. In addition volatile substances, such as oligomers and solvent, liable to contaminate the PPS material would tend not be removed sufficiently. If substantial amounts of the volatile substances remain in the cured PPS material, then they could adversely affect the moldability of the material and the physical and mechanical properties of the final molded or shaped products. On the other hand, if the curing temperature exceeds about 270°C, then the PPS particulates will coalesce or even become molten which tends to abruptly reduce their surface area. This retards effective removal of the undesired volatile substances from the PPS material. Further, the viscous mass of the molten material adheres to the interior surface of the curing apparatus and will interfere with removal of the cured product from the apparatus, cleaning of the interior of apparatus, and purging operations.

The present curing process should be continued under the above-specified conditions to such an extent that the cured PPS product exhibits a weight loss of not greater than 0.4% by weight when the cured PPS product is heated at a temperature of 330°C for a period of 30 minutes. The "weight loss upon heating" used herein means a percentage value that is calculated by the following equation:

$$\text{weight loss upon heating} = [(A - B) / A] \times 100 \text{ (wt.\%)}$$

wherein A is the weight of a sample of a cured PPS before being heated under the above-specified heating conditions, and B is the weight of the same sample after it has been heated under the said heating conditions. The heating test is conducted by heating and melting the weighed sample for 30 minutes in an oven maintained at 330°C and then weighing the sample after the heating.

If the thus specified weight loss percentage of a cured PPS material is greater than 0.4% by weight, then the cured PPS material would contain undesirably large proportions of residual volatiles, such as oligomers and solvent, which tend to lead to poor mold-impression or -replication and soiling or staining of the mold when the material is molded.

The period of curing used in the process depends largely upon the curing temperature used. The curing time should be sufficient to produce a cured PPS material exhibiting a weight loss upon heating of not greater than 0.4% by weight, when heated at 330°C for 30 minutes. Suitably, the curing time used in the present process will range from about 10 minutes to about 24 hours.

Once the weight loss percentage of 0.4% by weight or less has been attained in a PPS material in the course of the present process, if desired, an oxidizing gas, for example, air, oxygen, ozone or the like or a mixture thereof may be introduced into the non-oxidizing, inert gas atmosphere existing in the curing system, provided that the temperature is in the range in which a desired level of final melt viscosity may be achieved under control in spite of the introduction of oxidizing gas at the later stage. Preferably, said temperature is in the range of 192° to 270 °C.

The PPS materials that have been cured in accordance with the present process may be mixed, if desired, with inorganic fillers, organic and inorganic pigments, and fibrous fillers.

Exemplary inorganic fillers and organic and inorganic pigments include, for example, calcium carbonate, mica, talc, silicas, barium sulfate, calcium sulfate, kaolin, clay, pyrophylite, bentonite, sericite, zeolites, nephelinecinite, attapulgite, wollastonite, ferrites, calcium silicate, magnesium carbonate, dolomite, antimony trioxide, zinc oxide, titanium oxide, magnesium oxide, iron oxides, molybdenum disulfide, graphite, gypsum, glass beads, glass powder, glass balloons, quartz, quartz glass and the like.

Examples of fibrous fillers include glass fibers; carbon fibers; ceramic fibers, such as alumina fiber; aramide fibers; wholly aromatic polyester fibers; metallic fibers; potassium titanate fiber, and the like.

In addition, if desired, the cured PPS materials may be mixed with releasing agents, such as aromatic hydroxy derivatives, silane or titanate coupling agents, lubricants, heat stabilizers, weathering agents, nucleating agents, blowing agents, rust-proofing agents, ion-trapping agents, flame-retardants, flame-proofing aids and the like.

Further the cured PPS materials may be blended, before use, with one or more of homopolymers, random or block or graft copolymers of, for example, polyethylene, polypropylene, polybutadiene, polyisoprene, polychloroprene, polystyrene, polybutene, poly $\alpha$-methylstyrene, polyvinyl acetate, polyvinyl chloride, polyacrylate esters, polymethacrylate esters, polyacrylonitrile; polyamides, such as nylon 6, nylon 66, nylon 610, nylon 12, nylon 11 etc.; polyesters, such as polybutylene terephthalate, polyarylates; polyurethanes, polyacetals, polycarbonates, polyphenylene oxide, polyphenylene sulfide sulfone, polyphenylene sulfide ketone, polysulfone, polyether sulfone, polyaryl sulfone, polyether ketones, polyether ether ketones, polyimides, polyamide imides, silicone resins, phenoxy resins, fluorin resins, and the like.

The invention will be further illustrated with reference to the following non-limiting Examples.

The PPS materials used in the Examples were prepared as follows:

Preparation 1

A 15 liter-capacity reactor vessel provided with a stirrer, a dehydrating column and a jacket was charged with 5 liters of N-methyl-2-pyrrolidone (referred to as NMP hereinafter) and 1,872.5 g of sodium sulfide (purity: 60.4% as $Na_2S$) and was heated by means of the jacket with stirring to achieve an interior temperature of about 205°C while dehydrating the contents with the dehydrating column. During this dehydration stage, 420 g of a fraction mainly comprising water was distilled off. Then, 2,153 g of p-dichlorobenzene was introduced into the reactor vessel. Thereafter the mixture was heated to 250°C and permitted to react for a period of 3 hours. A raised pressure of 10.2 $kg/cm^2$ was found during the reaction stage.

Upon completion of the reaction, the reactor mixture was cooled down to about 100°C. Then the interior pressure of the reactor was reduced and the mixture was reheated to distill out of the reactor 5,200 g of a fraction mainly comprising NMP which was withdrawn through the dehydrating column. The vacuum was removed and atmospheric pressure was attained in the reactor vessel. To the reactor, 8 liters of water was added to form an aqueous slurry of the reacted mixture. The slurry was stirred and heated at 80°C for 15 minutes. Then, the slurry was withdrawn from the reactor via an outlet provided at the bottom of the reactor. The slurry was centrifugally separated to give a crude polymer product, which was returned to the reactor vessel, slurried with 8 liters of water, then stirred for 30 minutes at a raised temperature of 180°C, cooled down, and withdrawn from the vessel via the outlet. The slurry was again subjected to centrifugal separation to give a purified polymer product. The resulting polymer was dried in a jacketed ribbon blender. A sample of the thus dried, uncured PPS was taken and tested for its melt viscosity in a KOHKA-type flow tester at a temperature of 300°C using an orifice of a 0.5 mm diameter and a 2 mm length under a load of 10 kg. A melt viscosity, $\eta_0$, of 240 poises was found. The thus prepared PPS will be referred to as PPS-I.

Where a sample of PPS-I was cured in air at 250°C for 5 hours, the cured material showed a melt viscosity, $\eta_5$, of 1,780 poises.

Thus, in this case, the value of the algebraic expression:

$$\log \eta_5 / \log \eta_0$$

with respect to the melt viscosity before curing, $\eta_0$, and the melt viscosity after curing, $\eta_5$, was 1.37.

Preparation 2

Another PPS material was prepared by repeating the procedure as described in Preparation 1, except that the amount of p-dichlorobenzene added was changed to 2,131.5 g, and 23.9 g of 2,5-dichlorophenol was added simultaneously with the p-dichlorobenzene. The resulting polymer had a melt viscosity, $\eta_0$, of 200 poises. This product PPS will be referred to as PPS-II.

Where a sample of PPS-II was cured in air at 250°C for 5 hours, the cured material showed a melt viscosity, $\eta_5$, of 23,500 poises. Thus, the value of the algebraic expression:

$$\log \eta_5 / \log \eta_0$$

was 1.90.

Preparation 3

A further PPS was prepared by repeating the procedure as described in Preparation 1, except that the amount of p-dichlorobenzene added was changed to 2,067.6 g, and 70.0 g of 2,5-dichlorotoluene was added simultaneously with the p-dichlorobenzene. The resulting polymer had a melt viscosity, $\eta_0$, of 150 poises. This product PPS will be referred to as PPS-III.

Where a sample of PPS-III was cured in air at 250°C for 5 hours, the cured material showed a melt viscosity, $\eta_5$, of 8,280 poises. Thus the value of the algebraic expression:

$$\log \eta_5 / \log \eta_0$$

was 1.80.

Preparation 4

A still further PPS was prepared by repeating the procedure as described in Preparation 1, except that the amount of p-dichlorobenzene added was changed to 2,164,0 g, that the mixture, after addition of the p-dichlorobenzene, was heated up to 225°C over a period of 2 hours, and allowed to react at 225°C for 2 hours, and thereafter heated up to 250°C over a period of 30 minutes, and that when this temperature of 250°C was attained, 7,9 g of 1,2,4-trichlorobenzene was added together with 100 g of NMP to the mixture, which was allowed to react for a further 3 hours. The resulting polymer had a melt viscosity, $\eta_0$, of 260 poises. This product PPS

will be referred to as PPS-IV.

Where a sample of PPS-IV was cured in air at 250°C for 5 hours, the cured material showed a melt viscosity, $\eta_5$, of 21,600 poises.

Thus the value of the algebraic expression:

$$\log \eta_5 / \log \eta_0$$

was 1.79.

Comparative Example 1

PPS-I, 3 kg, was introduced into a 15 liter-capacity ribbon blender and agitated at 60 r.p.m. for 2 hours while flowing a stream of nitrogen at a rate of 5 liters per minute through the blender. Subsequently the flow rate of the nitrogen stream was reduced to 2 liters/minute and the temperature was raised to 250°C to effect curing of the material for 10 hours with agitation. At regular intervals during the curing stage, a sample of the resin under curing was withdrawn in an amount of 20 g every time and tested for melt viscosity and weight loss on heating. The melt viscosity was determined in a KOHKA-type flow tester using an orifice of a 0.5 mm diameter and a 2 mm length at 330°C under a load of 10 kg, and the weight loss percentage was determined by heating a weight of the sample at 300°C for a period of 30 minutes and calculating the percentage from the difference in weight before and after the heating. The data on the weight loss were used as a measure for determining the duration of the curing stage. In this case, the curing stage was completed after the 10 hours in that the cured material showed a melt viscosity of 510 poises and a weight loss on heating of 0.23% by weight. The results demonstrate that where a PPS material showing $\log \eta_5 / \log \eta_0 \leqq 1.5$ with respect to melt viscosity properties before and after the curing test in the specified manner, is cured in a nitrogen atmosphere, the weight loss upon heating is reduced to a significantly low level, but the melt viscosity is not satisfactorily increased; and that such a PPS material, when being cured, will make controlling or regulation of the melt viscosity to a desirably high level difficult. The results are summarized in Table 1.

Example 1

The procedure of the preceding Comparative Example 1 was repeated except that PPS-II was used in place of PPS-I and cured in nitrogen at 250°C for 5 hours. After curing, the material had a melt viscosity of 3,300 poises, and a weight loss upon heating of 0.31%.

The results demonstrate that where a PPS material showing $\log \eta_5 / \log \eta_0 \geqq 1.5$ with respect to the melt viscosity properties before and after the curing test in the specified manner, is cured in a nitrogen atmosphere, the melt viscosity may be increased to a desirably high level with easy control. See Table 1.

Example 2

The procedure of Comparative Example 1 was repeated except that PPS-III was used in place of PPS-I and cured in a nitrogen atmosphere at 230°C for 10 hours. After curing, the cured material showed a melt viscosity of 3,000 poises and a weight loss upon heating of 0.33%. The results are suggestive of that even if a curing temperature that is not so high is employed, it is possible to increase the melt viscosity to a satisfactorily high level by appropriately extending the length of the curing time. Again, easy control of the melt viscosity properties is achieved under these conditions. See Table 1.

Example 3

The procedure of Comparative Example 1 was repeated except that PPS-IV was employed in place of PPS-I and cured in a nitrogen atmosphere at 250°C for 5 hours. After curing, the cured material showed a melt viscosity of 3,200 poises and a weight loss upon heating of 0.28%. The results show again that where a PPS material satisfying the relation of $\log \eta_5 / \log \eta_0 \geqq 1.5$ with respect to the melt viscosity properties before and after the specified curing test, is cured in a nitrogen atmosphere, the curing process may be controlled to achieve a desirably increased melt viscosity with ease. See Table 1.

Comparative Example 2

The procedure of Comparative Example 1 was repeated except that PPS-IV was employed in place of PPS-I and cured in air at 250°C for 5 hours. After curing, the cured material showed a drastically increased melt viscosity of 21,600 poises and a weight loss upon heating of 0.21%. The results show that, even if the PPS

material satisfies the relation of log $\eta_5$ / log $\eta_0 \geqq 1.5$, where the material is conventionally cured in air, the melt viscosity is increased at an unduly increased rate so that it is difficult to control the curing process to obtain a usefully increased level of melt viscosity. See Table 1.

Comparative Example 3

The procedure of Comparative Example 1 was repeated except that PPS-IV was employed in place of PPS-I and cured in air under relatively cold conditions of a temperature of 230°C for 3 hours. After curing, the cured material had a melt viscosity of 3,000 poises and a weight loss of 0.44% when heated at 330°C for 30 minutes.

The cured material was molded into test specimens which were subjected to tensile testing in accordance with ASTM 638. A tensile strength of 330 kg/cm$^2$ was found.

In this case, even though a relatively low temperature was employed in the curing stage aiming for moderating or reducing the excessively increased curing rate in air so as to achieve a desirable level of melt viscosity in a precisely controlled timing, poor mechanical properties of the molded product resulted, possibly, from the fact that the volatile materials, such as oligomers and solvent, contaminating the PPS material were not sufficiently removed during the low-temperature curing stage. See Table 1.

Table 1 also contains the tensile strength data (ASTM 638) of moldings formed from the cured materials of the respective Examples.

Table 1

| | PPS Sample No. | Melt viscosity properties poises $\eta_0$ | Melt viscosity properties poises $\eta_5$ | $\log \eta_5 / \log \eta_0$ | Curing conditions | Melt viscosity after curing Poises | Weight loss upon heating wt.% | Tensile strength[1)] kg/cm² |
|---|---|---|---|---|---|---|---|---|
| Comp.Ex. 1 | PPS-I | 240 | 1780 | 1.37 | in $N_2$, 250 °C, 10 hrs | 510 | 0.23 | 450 |
| Example 1 | PPS-II | 200 | 23500 | 1.90 | in $N_2$, 250 °C, 5 hrs | 3300 | 0.31 | 430 |
| Example 2 | PPS-III | 150 | 8280 | 1.80 | in $N_2$, 230 °C, 10 hrs | 3000 | 0.33 | 350 |
| Example 3 | PPS-IV | 260 | 21600 | 1.79 | in $N_2$, 250 °C, 5 hrs | 3200 | 0.28 | 470 |
| Comp.Ex. 2 | PPS-IV | 260 | 21600 | 1.79 | in air, 250 °C, 5 hrs | 21600 | 0.21 | -[2)] |
| Comp.Ex. 3 | PPS-IV | 260 | 21600 | 1.79 | in air, 230 °C, 3 hrs | 3000 | 0.44 | 330 |

1) Determined in accordance with the method of ASTM 638.

2) It was impossible to prepare test specimen due to the excessively high viscosity properties.

From the foregoing, it can be seen that, where a PPS material exhibiting a high curing rate is cured in a non-oxidizing, inert gas, the melt viscosity of the PPS material may be increased under easier and simpler control as compared with the case where the same PPS material is conventionally cured in air. Further, the curing in the non-oxidizing, inert gas is effective for removal of undesirable volatile materials such as oligomers and solvent and, thus, provides a cured PPS which, when molten, will not evolve a large volume of gases resulting in poor mold-impression or -replication and soiling or staining of the mold. The cured PPS evolving less or little amount of gases, when molten, will form moldings of improved mechanical properties and free of gas-voids.

## Claims

1. A process for preparing modified polyphenylene sulfide resins which comprises curing a polyphenylene sulfide resin material by heating it in a non-oxidizing, inert gas at a temperature in the range of from about 190°C to about 270°C, characterized in that the said polyphenylene sulfide material has melt viscosity properties satisfying the following algebraic expression:

   $$\log \eta_5 / \log \eta_0 \geqq 1.5$$

   where $\eta_5$ represents the value of the melt viscosity that will be observed with the starting polyphenylene sulfide material after it has been cured in air at 250°C for 5 hours, and

   $\eta_0$ represents the value of the melt viscosity that is observed with the starting polyphenylene sulfide material as such; and

   wherein the curing of the said starting PPS material in the non-oxidizing, inert gas is conducted to such an extent that the cured resin product will exhibit a weight loss upon heating of not greater than 0.4% by weight when the said cured resin product is heated at 330°C for 30 minutes.

2. A process as claimed in Claim 1 characterized in that the polyphenylene sulfide resin material is a homopolymer synthesized from a p-dihalobenzene.

3. A process as claimed in Claim 1 characterized in that the polyphenylene sulfide resin material is a copolymer synthesized from a p-dihalobenzene with a minor proportion of at least one of other dihalo aromatic compounds, polyhalo aromatic compounds or monohalo aromatic compounds.

4. A process as claimed in Claim 1, 2 or 3 characterized in that the inert gas contains less than 1% by volume of oxygen.

5. A process as claimed in any one of the preceding claims characterized in that the curing reaction is effected for a period of about 10 minutes to about 24 hours.

6. A process as claimed in any one of the preceding claims characterized in that an oxidizing gas is introduced into the non-oxidizing inert gas atmosphere of the curing system when a weight loss upon heating of 0.4% by weight or less has been attained.

7. A resinous composition comprising a cured polyphenylene sulfide resin prepared in accordance with a process as claimed in any one of Claims 1 to 6.

8. A resinous composition as claimed in Claim 7 characterized in that it includes one or more releasing agents, such as aromatic hydroxy derivatives, coupling agents, e.g. silane or titanate coupling agents, lubricants, heat stabilizers, weathering agents, nucleating agents, blowing agents, rust-proofing agents, ion-trapping agents, flame-retardants, flame-proofing aids and the like, or one or more other additives.

9. A resinous composition as claimed in Claim 7 or 8 characterized in that it includes one or more of homopolymers, random or block or graft copolymers of polyethylene, polypropylene, polybutadiene, polyisoprene, polychloroprene, polystyrene, polybutene, poly $\alpha$-methylstyrene, polyvinyl acetate, polyvinyl chloride, polyacrylate esters, polymethacrylate esters, polyacrylonitrile; polyamides, such as nylon 6, nylon 66, nylon 610, nylon 12, nylon 11 etc.; polyesters, such as polybutylene terephthalate, polyarylates; polyurethanes, polyacetals, polycarbonates, polyphenylene oxide, polyphenylene sulfide sulfone, polyphenylene sulfide ketone, polysulfone, polyether sulfone, polyaryl sulfone, polyether ketones, polyether ether ketones, polyimides, polyamide imides, silicone resins, phenoxy resins, fluorin resins, and the like, or other polymeric materials.

**10.** Molded or shaped articles formed from a composition as claimed in any one of the preceding claims.

European Patent Office

# EUROPEAN SEARCH REPORT

Application Number

EP 92 30 5446

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 408 274 (TOSOH) * page 2, line 49 - page 3, line 17; claims 7-10; examples 1,3,4; table 1 * | 1-5,6-10 | C08G75/02 C08J3/24 |
| A | GB-A-2 021 608 (ASAHI GLASS COMPANY) * page 2, line 50 - line 63; claims 1-13 * | 1-5 | |
| A | US-A-3 354 129 (J. T. EDMONDS AND H. W. HILL) * column 5, line 75 - column 6, line 11; example 6 * | 1-5 | |
| A | EP-A-0 064 300 (PHILLIPS PETROLEUM COMPANY) * claims 1-4; examples; tables * | 1-5 | |
| A | US-A-4 510 297 (CH. W. MOBERLY) * claim 1 * | 1 | |

TECHNICAL FIELDS SEARCHED (Int. Cl.5)

C08G
C08J

The present search report has been drawn up for all claims

| Place of search | Date of completion of the search | Examiner |
|---|---|---|
| THE HAGUE | 09 SEPTEMBER 1992 | KLIER E.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)